# EUROPEAN PATENT SPECIFICATION

(11) **EP 2 574 860 B1**
(45) Date of publication and mention of the grant of the patent: **07.03.2018**
(21) Application number: 12159475.8
(22) Date of filing: 14.03.2012
(51) Int. Cl.: F24F 7/00, F24F 13/14, F24F 11/04, F24F 13/18, E06B 7/02, F24D 13/02, E04B 1/70

(54) **Ventilation device with heating, as well as a building containing such a ventilation device.**
Belüftungseinrichtung mit Heizung, sowie ein Gebäude mit einer solchen Einrichtung
Dispositif de ventilation avec chauffage, ainsi que d'un bâtiment comportant un tel dispositif.

(30) Priority: 15.03.2011 NL 2006400
(43) Date of publication of application: 03.04.2013
(73) Proprietor: Vero Duco N.V., 8630 Veurne (BE)
(72) Inventor: Renson, Luc Louis, BE- 8620 Nieuwpoort (BE)
(74) Representative: Nederlandsch Octrooibureau

(56) References cited:
- DE-A1- 3 419 001
- GB-A- 1 488 983
- GB-A- 2 304 404
- NL-C2- 1 027 908

## Description

The invention relates to a passive ventilation device for use in a building, comprising an elongate housing which defines a longitudinal direction x, a vertical direction z at right angles to the longitudinal direction and a transverse direction y at right angles to the longitudinal direction and vertical direction, which housing comprises interconnected profiles which are directed in the longitudinal direction, a ventilation passage which extends in the transverse direction between an inlet of the housing to be facing towards the exterior of the building and an outlet of the housing to be facing towards the interior of the building in order to provide an air flow between the inlet and the outlet, as well as a flap for closing or opening the ventilation passage, in which a substantially flat heating means is provided with at least one heat-exchanging surface which extends along the longitudinal direction.

DE-A-3419001 discloses a ventilation device with an internal grating via which grating the fresh air flows into the space situated behind it. Onto this internal grating, a strip of heating foil is stuck which extends across the grating openings and is provided with a corresponding pattern of holes. A drawback of this known heating is that it results in the grating itself also becoming hot; in extreme cases, the user may even burn his/her hands on it. In addition, a heating foil which is fitted in such a manner may also impede the free flow of air, as a result of which the operation of ventilation devices is significantly adversely affected, particularly passive ventilation devices. The known heating means is substantially flat; in the context of the invention, this is understood to mean a heating means which has at least one heat-exchanging surface which is indeed substantially flat, but does not have to be completely flat. In addition to a completely flat heat-exchanging surface, the scope of the invention also covers a heat-exchanging surface which is slightly curved or bent, in such a manner that the air flowing past it experiences only minimal resistance.

Passive ventilation devices are generally known and may, for example, be incorporated in a frame, adjoining the edge of an opening in the façade. However, such a ventilation device may also be situated underneath a frame or on the upright edges thereof, in each case adjoining the edge of the opening in the façade. According to yet another variant, the ventilation device may be situated in the frame, between a horizontal frame beam and the glazing, namely on the top side or the bottom side of the glazing. In addition, the ventilation device may be situated between a vertical frame beam and the glazing. The ventilation device can also be situated between two frame beams.

The operation of a ventilation device of this type is solely based on the pressure difference which prevails between the inlet and the outlet, in other words between the exterior and the interior of the building. This means that there are no active elements present which influence the air flow through the ventilation device, such as a blower or propeller or the like. The passage in the ventilation device has to be as large as possible and thus has to have as few obstructions to the air flow as possible, since the relatively low pressure differences across the ventilation device will otherwise not result in an acceptable flow.

On account of the pressure difference, a flow of air from the outside to the inside of the building may be produced. In order to ensure such a passive air flow, a ventilation system with a low flow resistance has to be used. The reason for this is that the differences in pressure between the interior and the exterior of the building are relatively small, while a certain required flow rate has to be ensured nevertheless. In modem building regulations, these requirements are stipulated, so that at least new building projects and renovation projects have to meet these conditions.

In practice, a large number of proposals have already been made for ventilation devices which meet said requirements. Although all of these ventilation devices more or less satisfy the requirements of ventilation at a certain pressure drop between the interior and the exterior of a building, these systems can nevertheless be improved upon. Thus, a significant drawback of the known ventilation devices occurs when the temperature of the outside air is low. In such cases, the cold outside air can directly enter the interior of the building, which gives rise to draught phenomena, thus adversely affecting comfort. It is also possible for downflows to occur which lead to a further deterioration of the level of comfort.

Therefore, the ventilation device is usually closed when the inlet of fresh outside air is not necessary or not desired. The latter may be the case, for example, when there is a strong wind. Low outside temperatures may also cause the ventilation device to be closed, since those conditions may result in a cold draught which is regarded as being unpleasant. However, it is undesirable to close the ventilation device regularly, due to the gradual decline in the quality of the inside air in the respective space in the interior of the building associated therewith, such as with regard to CO₂, moisture, odours and the like.

It is therefore preferable to heat the outside air before it enters the interior of the building. In addition to the ventilation device which has already been mentioned and is known from DE-A-3419001, reference is made to DE-A-4143036 which discloses heating outside air in an active ventilation device by placing a heating spiral in the flow passage. The air flow is in this case brought about by a blower, in such a way that the relatively cold outside air is forced past the heating spiral before entering the internal space. This known ventilation device is of a different type and has a housing which forms a part of the horizontal frame beam. The housing, which is not described in any more detail, is not composed of interconnected profiles. In addition, it is not possible to retrofit the ventilation device with a heating system.

It will be clear that the positioning of an obstacle, such as a heating spiral, in the passage detracts greatly from its flow capacity. While in an active ventilation system, the reduced flow capacity can be overcome by the blowing action of the blower, this is not possible in the case of a passive ventilation system. A passive ventilation device according to the preamble of claim 1 is known from DE-A-3419001. It is therefore an object of the invention to provide a ventilation device of the passive type which, on the one hand, has the desired flow capacity, but, on the other hand, makes it possible to heat the incoming air. This object is achieved by the fact that the heat-exchanging surface also extends in the transverse direction of the ventilation device.

In the ventilation device according to the invention, the incoming air can be heated by allowing it to flow past a relatively hot sheet or hot foil or hot plate or hot profile. In this case, the air hardly experiences any additional resistance, since the abovementioned sheet/foil or the plate/profile have a relatively flat surface and are directed substantially along the flow direction in the transverse direction. The heating means may coincide with the transverse direction, but may be oriented obliquely with respect to the transverse direction, depending on the direction of the air flow. The heating means, viewed in projection on the horizontal x-y plane, in each case comprises a component in the transverse direction y. In this case, the sheet/the foil or the plate/the profile do not have to be completely flat, but may also have, for example, a curved shape. Even such an embodiment hardly causes any additional flow resistance, in particular if the sheet/the foil or the plate/the profile can follow the shape of the passage which is already present anyway. Furthermore, the sheet/the foil or the plate/the profile may have a specific surface structure, such as ridges, indentations, specks and the like, if the overall embodiment of the surface remains relatively smooth.

A further advantage of the transversely oriented, flat heating means is that it is situated in the interior of the housing, in such a way that the user is well protected against the relatively high temperatures thereof. The heating means may be arranged in various ways along the transverse direction. According to a first possibility, a heat-exchanging surface can extend obliquely with respect to the transverse direction. In particular, a heat-exchanging surface may coincide with the transverse direction.

The chosen shape of the heating means may also be different. According to a simple embodiment, a heat-exchanging surface may be straight in cross section. However, other shapes are also possible, in particular bent or curved in cross section.

As has already been mentioned, the incoming air is heated as a result of the fact that it passes over the heat-exchanging surface. The heat transfer thus depends on the size of said surface. However, the dimensions of the heat-exchanging means can be limited, at a relatively high heat transfer, if the heating means has two heat-exchanging surfaces which are turned away from each other and each extend substantially along the transverse direction. The incoming air can now pass across both surfaces, which has a favourable effect on the increase in air temperature.

The heating means itself can also be embodied in many different ways. It may, for example, consist of one or more resistance wires which are incorporated in or embedded in a flat plate. However, according to a preferred simple embodiment, the heating means may be embodied in the form of a sheet or plate of electrically conductive material. In particular, the heating means may be incorporated on an auxiliary profile.

An embodiment in which the heating element comprises a heating foil which conducts an electric current is preferred. This heating foil may be bonded to a profile by means of an adhesive layer and the like. The presence of such a heating foil with a small thickness dimension hardly has any influence on the course of the air flow. Such a heating foil may consist of a polymer which incorporates carbon particles forming conductive circuits. As a consequence of applying a low-voltage current, a current will start to flow through these circuits, resulting in an increase in temperature. Due to the temperature increase, the polymer material expands, as a result of which the circuits consisting of carbon particles are interrupted and become non-conductive. Therefore, the resistance of the circuits increases, as a result of which the polymer material will remain hot while current is being applied. An example of one such material is known from WO-A-01/56333.

The plate-like heating means may be supported in the housing by supports which are spaced apart in the longitudinal direction. These supports preferably consist of a heat-insulating material, such as a heat-resistant plastic. In this embodiment, it is ensured that the incoming air can pass across both the top side and the bottom side of the heating means.

The heating means may be suspended in the housing in different ways. Thus, the heating means may be connected to one of the profiles of the housing. According to a further possibility, the housing contains an auxiliary profile to which the heating means is attached.

In the ventilation device according to the invention, the air can flow through the housing in a standard manner: in contrast to a heating spiral known from the active ventilation device according to DE-A-4143036, a relatively flat plate or flat sheet, or a profile with a foil hardly forms an obstacle for the air flowing past. The result thereof is that even at low outside temperatures, the natural ventilation can be maintained without producing an unpleasant, cold draught. If necessary, the air is heated additionally before entering the ventilated space. The additional heating may, for example, be switched on automatically as soon as the outside temperature drops below a certain value and the ventilation device is open. It is also possible for the additional heating to be operated manually.

The heating means can be fitted in different positions. Preferably, the heating element may be attached to one of the profiles of the housing which delimit the flow passage. According to a further possibility, the housing may have an auxiliary profile on the outlet from which the heating means is suspended. This auxiliary profile can be oriented in a suitable manner, so that the air flow is not significantly obstructed. For example, the auxiliary profile may be substantially flat and extend from the bottom side of the housing obliquely upwards along the outlet.

According to another possibility, the outlet may be provided with a flap which can be moved between an open position for opening the outlet and a closed position for closing the outlet. In such a case, the heating element may be situated on said flap.

With all these embodiments, it is also possible to retrofit the heating, in combination with the external auxiliary profile or on the flap which is accessible from the space to be ventilated. Likewise, it is possible to remove the profile with the heating element in connection with replacement of the heating element, for example when this is faulty. In this connection, an auxiliary unit may be provided which carries heating means, which auxiliary unit cooperates with the housing or cooperates with a part of the housing in a replaceable manner. The connection of such an auxiliary unit may, for example, be in the form of click-fit means, in such a manner that a new heating means can be fitted in a simple manner.

The invention also relates to a building, comprising a façade and a passive ventilation device as described above for passively supplying outside air to the building on account of a pressure difference between the exterior and the interior of the building.

Although embodiments have been described above in which the orientation in the transverse direction of the heat-exchanging surface plays a part, it is also possible to achieve a satisfactory result by providing two heat-exchanging surfaces which are turned away from one another. In this case, the incoming air can flow along both heat-exchanging surfaces in such a manner that the orientation is then not of overriding importance.

The invention will now be explained in more detail below by means of the exemplary embodiments illustrated in the figures, in which:
Fig. 1 shows a first embodiment of a building comprising the ventilation device.
Fig. 2 shows a second embodiment;
Fig. 3 shows a third embodiment;
Fig. 4 shows a fourth embodiment.

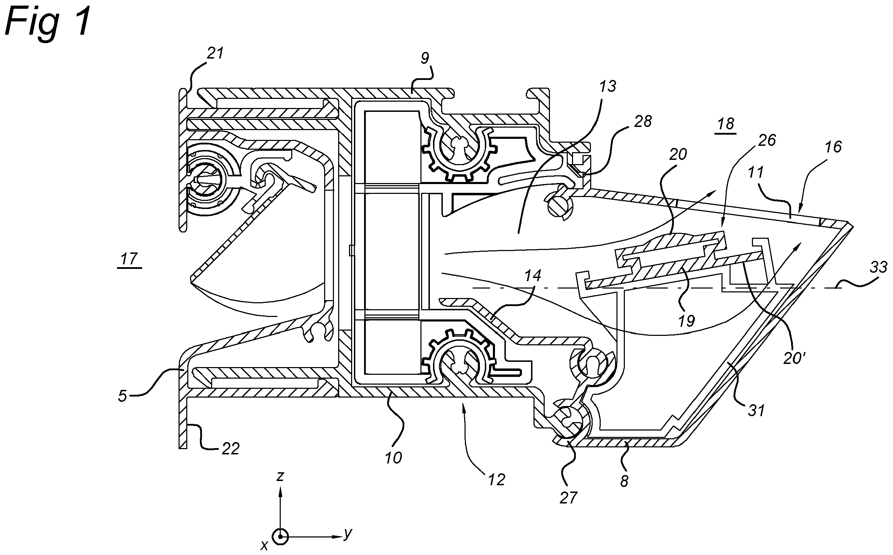

Fig. 1 shows a first variant of the ventilation device 1 which is composed, in a known manner, of a number of interconnected profiles, including the outer profile 5, the inner profile 8 and the connecting profiles 9, 10. Between the inner profiles 7, 8, the punched grating 11 extends. Together, these profiles form the housing 12 of the ventilation device. The ventilation passage 13 extends through this housing 12 between the inlet 15 and the outlet 16. The ventilation passage 13 can be closed by means of the flap 14 which is suspended from the lower inner profile 8 so as to be able to rotate.

The ventilation device 1 forms the connection between the exterior 17 and the interior 18 of the building, and supplies fresh outside air to the space which is situated in the interior of the building when the flap 14 is open. However, particularly if the outside air is cold, an unpleasant cold draught may occur in this space. In order to combat such a cold draught, the outlet 16 is followed by an auxiliary profile 19 being fitted which extends obliquely upwards along the outlet from the bottom inner profile 8. On the side of said auxiliary profile 19 which is turned towards the outlet, a heating foil 20 is fitted. Although the auxiliary profile is positioned obliquely, it may also be oriented horizontally along the horizontal plane or x-y plane 33. In each case, the auxiliary profile has a component which extends in the transverse direction y in projection on said x-y plane.

If the temperature of the supplied outside air is too low, this heating foil can be heated electrically. The outside air passing over the heating foil (see arrows) and coming from the outlet 16 can then be heated additionally to reach a temperature which is such that no unpleasant draught occurs. Incidentally, the operation of the ventilation device is not affected by this heating, which means that the desired ventilation of the space situated behind it can be ensured, even at relatively low outside temperatures.

The auxiliary profile 19 with the heating foil 20 is supported at the centre of the housing 12 by spaced-apart supports 31. These supports are preferably made of a heat-resistant plastic and insulate the heating means 19, 20 with respect to the various profiles of the housing. Due to this positioning of the heating means 19, 20, the air can pass over both surfaces thereof which extend in the transverse direction, resulting in an optimum heat exchange. At the upper surface, the air passes directly over the heating foil 20 itself. This heating foil 20 also heats the auxiliary profile 19, so that the air which flows along the bottom side is heated by said auxiliary profile.

If desired, a second heating foil 20' may be fitted on the bottom side of the auxiliary profile in order to heat the air flowing past underneath. The heating foils 20, 20' also always have a component in the transverse direction y, viewed in projection on the x-y plane.

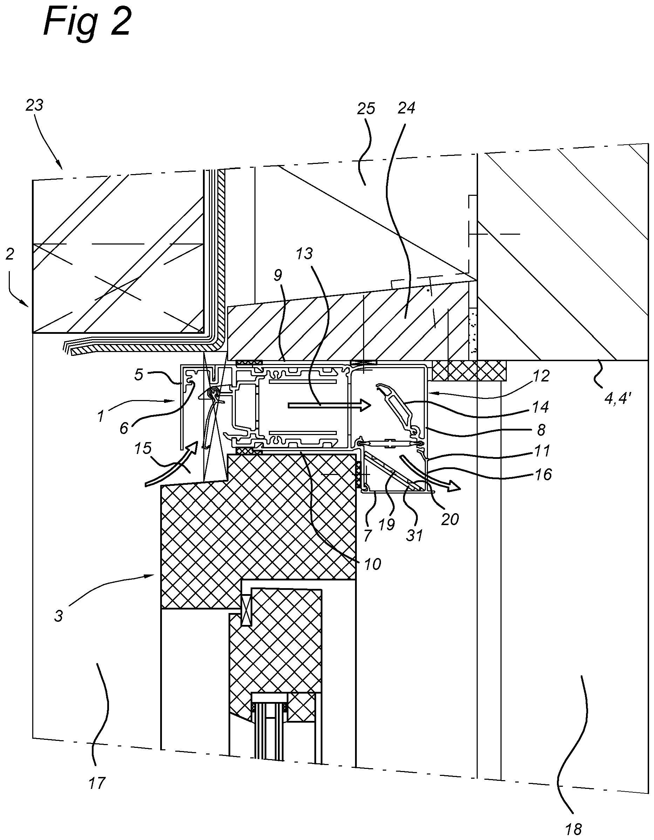

According to the variant from Fig. 2, the ventilation device 1 is fitted between the frame 3 and the lintel 24 which delimits the cavity 25 between the inner cavity wall leaf and the outer cavity wall leaf of the façade 2 of the building 23. The housing 12 has an inlet 15, a ventilation passage 13 and an outlet 16 which can be closed by the flap 14 and which is delimited by the grating 11. On the inner side, the housing 12 extends slightly downwards; in this extended section, an oblique auxiliary profile 19 is provided to which the heating foil or plate 20 is attached.

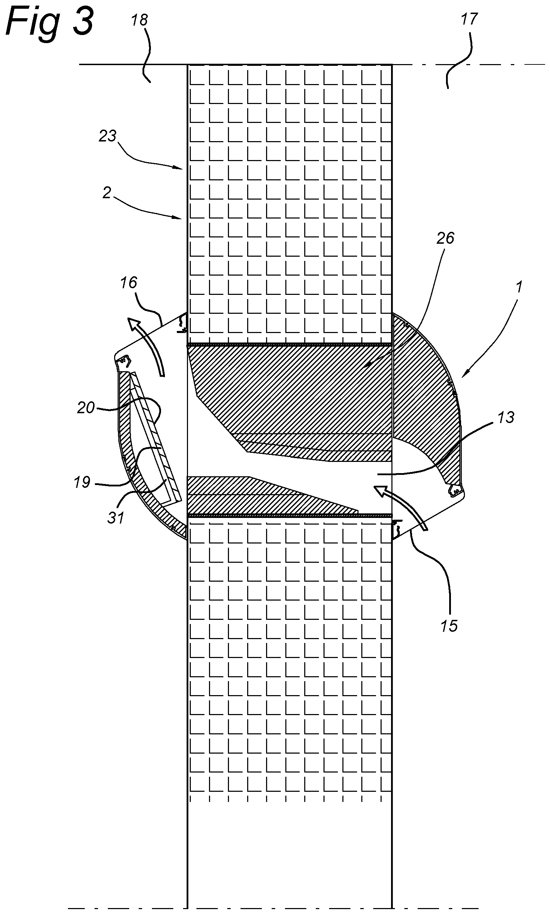

The sound-insulating ventilation grille 26 shown in Fig. 3 is fitted in a hole in the façade 2 of the building 23. The sound-insulating ventilation grille has a ventilation passage 13 which extends between the inlet 15 and the outlet 16. Near the outlet, the auxiliary profile 19 with the heating element 20 is fitted in order to heat the outside air.

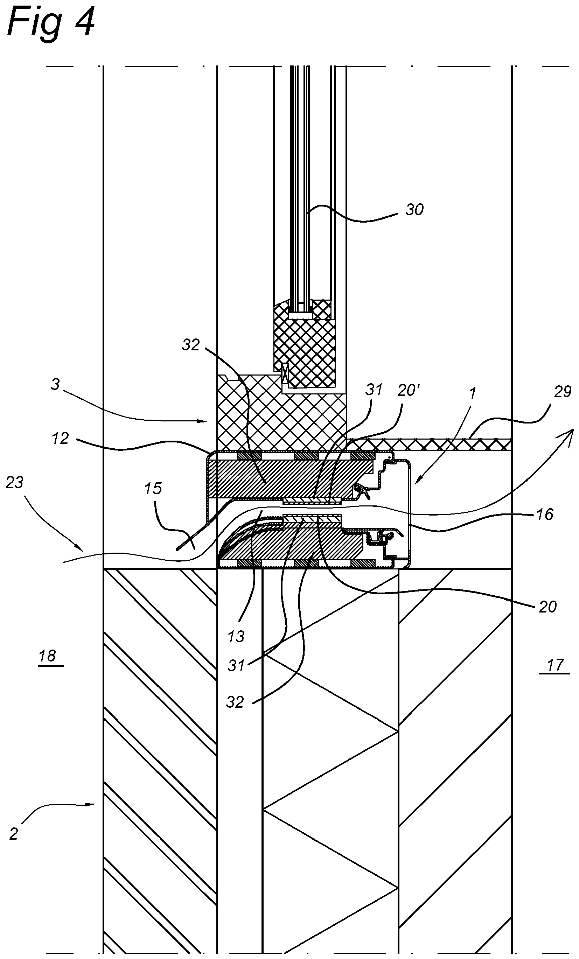

Fig. 4 shows a positioning of the ventilation device 1 underneath a windowsill 29 underneath the frame 3 containing glass panel 30 which is situated in the façade 2 of the building 23. In the ventilation passage 13 between the inlet 15 and the outlet 16 of the ventilation device, the heating element 20 is fitted on the bottom side of the passage. Alternatively, the heating element 20' may be fitted on the top side of the passage. Alternatively, the ventilation device may also be fitted in a frame itself, namely between the top cross beam thereof and a glass panel.

### List of reference numerals

- 1: Ventilation device
- 2: Façade
- 3: Frame
- 4: Bottom boundary of opening in the façade
- 4': Ceiling
- 5, 6: Outer profile
- 7, 8: Inner profile
- 9, 10: Connecting profile
- 11: Inner grating
- 12: Housing
- 13: Ventilation passage
- 14: Flap
- 15: Inlet
- 16: Outlet
- 17: Exterior of the building
- 18: Interior of the building
- 19: Auxiliary profile
- 20, 20': Heating foil
- 21: Housing attachment means
- 22: Housing attachment means
- 23: Building
- 24: Lintel
- 25: Cavity
- 26: Auxiliary unit
- 27, 28: Click-fit connection for auxiliary unit
- 29: Windowsill
- 30: Glass panel
- 31: Heating means support
- 32: Sound-insulating material
- 33: Horizontal plane or plane of projection

## Claims

1. Passive ventilation device for use in a building, comprising an elongate housing (12) which defines a longitudinal direction x, a vertical direction z at right angles to the longitudinal direction and a transverse direction y at right angles to the longitudinal direction and vertical direction, which housing (12) comprises interconnected profiles (5-11) which are directed in the longitudinal direction, a ventilation passage (13) which extends in the transverse direction between an inlet (15) of the housing (12) to be facing towards the exterior (17) of the building and an outlet (16) of the housing to be facing towards the interior (18) of the building in order to provide an air flow between the inlet and the outlet, as well as a flap (14) for closing or opening the ventilation passage (13), in which a substantially flat heating means (20, 20') is provided with at least one heat-exchanging surface which extends along the longitudinal direction, **characterized in that** the heat-exchanging surface also extends in the transverse direction y.

2. Ventilation device according to Claim 1, wherein the heat-exchanging surface extends obliquely with respect to the transverse direction y.

3. Ventilation device according to Claim 1, wherein the heat-exchanging surface coincides with the transverse direction y.

4. Ventilation device according to one of the preceding claims, wherein the heat-exchanging surface is straight in cross section or curved in cross section.

5. Ventilation device according to one of the preceding claims, wherein the heating means has two heat-exchanging surfaces which are turned away from each other and each extend in the transverse direction and/or are mutually substantially parallel.

6. Ventilation device according to one of the preceding claims, wherein the heating means is embodied in the form of a sheet or plate of electrically conductive material.

7. Ventilation device according to one of the preceding claims, wherein the heating means in the housing is supported by supports (31) which are spaced apart in the longitudinal direction.

8. Ventilation device according to Claim 8, wherein the supports (31) are configured to be thermally insulating.

9. Ventilation device according to one of the preceding claims, wherein the heating means (20') is connected to one of the profiles (5-11) of the housing (12).

10. Ventilation device according to one of the preceding claims, wherein the housing (12) contains an auxiliary profile (19) to which the heating means (20) is attached.

11. Ventilation device according to one of the preceding claims, wherein the heating means (20) is situated inside the profiles (5-11) which define the housing (12).

12. Ventilation device according to one of the preceding claims, wherein the outlet (16) is provided with a flap (14) which can be moved between an open position for opening the outlet and a closed position for closing the outlet, and the heating element (20) is situated on said flap (14).

13. Ventilation device according to one of the preceding claims, comprising attachment means which are situated on the top side of the housing for attachment to a frame beam and bottom attachment means for attachment to a panel, such as a glass pane and/or attachment means (21) which are situated on the top side of the housing for attachment to the boundary (4) of an opening in the façade and bottom attachment means (22) for attachment to a frame (3).

14. Ventilation device (1) according to one of the preceding claims, wherein an auxiliary unit (26) is provided which carries the heating means (20, 20'), which auxiliary unit cooperates with the housing (12) in a replaceable manner, such as by means of click-fit means (27, 28).

15. Building (23), comprising a façade (2) and a passive ventilation device according to one of the preceding claims, for passively supplying outside air to the building on account of a pressure difference between the exterior (17) and the interior (18) of the building.

## Patentansprüche

1. Passive Belüftungsvorrichtung zur Verwendung in einem Gebäude, die ein längliches Gehäuse (12) aufweist, das eine Längsrichtung x, eine Vertikalrichtung z rechtwinklig zu der Längsrichtung und eine Querrichtung y rechtwinklig zu der Längsrichtung und der Vertikalrichtung definiert, wobei das Gehäuse (12) miteinander verbundene Profile (5-11), die in die Längsrichtung gerichtet sind, einen Lüftungskanal (13), der sich in die Querrichtung zwischen einem Einlass (15) des Gehäuses (12), um in Richtung der Außenseite (17) des Gebäudes gerichtet zu sein, und einem Auslass (16) des Gehäuses, um in Richtung der Innenseite (18) des Gebäudes gerichtet zu sein, erstreckt, um einen Luftstrom zwischen dem Einlass und dem Auslass vorzusehen, sowie eine Klappe (14) zum Schließen oder Öffnen des Belüftungskanals (13) aufweist, in dem eine im wesentlichen flache Heizeinrichtung (20, 20') vorgesehen ist, mit mindestens einer Wärmetauschfläche, die sich entlang der Längsrichtung erstreckt, **dadurch gekennzeichnet, dass** sich die Wärmetauschfläche auch in die Querrichtung y erstreckt.

2. Belüftungsvorrichtung gemäß Anspruch 1, wobei sich die Wärmetauschfläche schräg bezüglich der Querrichtung y erstreckt.

3. Belüftungsvorrichtung gemäß Anspruch 1, wobei die Wärmetauschfläche mit der Querrichtung y übereinstimmt.

4. Belüftungsvorrichtung gemäß einem der vorstehenden Ansprüche, wobei die Wärmetauschfläche im Querschnitt gerade oder im Querschnitt gekrümmt ist.

5. Belüftungsvorrichtung gemäß einem der vorhergehenden Ansprüche, wobei die Heizeinrichtung zwei Wärmetauschflächen hat, die voneinander abgewandt sind und sich jeweils in die Querrichtung erstrecken und/oder im Wesentlichen zueinander parallel sind.

6. Belüftungsvorrichtung gemäß einem der vorhergehenden Ansprüche, wobei die Heizeinrichtung in der Gestalt einer Folie oder Platte aus elektrisch leitfähigem Werkstoff ausgeführt ist.

7. Belüftungsvorrichtung gemäß einem der vorhergehenden Ansprüche, wobei die Heizeinrichtung in dem Gehäuse durch Stützen (31) gestützt ist, die mit Abständen in der Längsrichtung angeordnet sind.

8. Belüftungsvorrichtung gemäß Anspruch 8, wobei die Stützen (31) gestaltet sind, um wärmedämmend zu sein.

9. Belüftungsvorrichtung gemäß einem der vorhergehenden Ansprüche, wobei die Heizeinrichtung (20') mit einem der Profile (5-11) des Gehäuses (12) verbunden ist.

10. Belüftungsvorrichtung gemäß einem der vorhergehenden Ansprüche, wobei das Gehäuse (12) ein Hilfsprofil (19) enthält, an dem die Heizeinrichtung (20) angebracht ist.

11. Belüftungsvorrichtung gemäß einem der vorhergehenden Ansprüche, wobei die Heizeinrichtung (20) innerhalb der Profile (5-11) gelegen ist, die das Gehäuse (12) definieren.

12. Belüftungsvorrichtung gemäß einem der vorhergehenden Ansprüche, wobei der Auslass (16) mit einer Klappe (14) versehen ist, die zwischen einer offenen Position zum Öffnen des Auslasses und einer geschlossenen Position zum Schließen des Auslasses bewegt werden kann, und das Heizelement (20) an der Klappe (14) gelegen ist.

13. Belüftungsvorrichtung gemäß einem der vorhergehenden Ansprüche, mit Anbaueinrichtungen, die an der oberen Seite des Gehäuses gelegen sind, zum Anbringen an einen Rahmenbalken und Bodenanbaueinrichtungen zum Anbringen an eine Paneele, wie zum Beispiel einer Glasscheibe, und/oder Anbaueinrichtungen (21), die an der oberen Seite des Gehäuses gelegen sind, zum Anbringen an der Grenze (4) einer Öffnung in der Fassade und Bodenanbaueinrichtungen (22) zum Anbringen an einem Rahmen (3).

14. Belüftungsvorrichtung (1) gemäß einem der vorhergehenden Ansprüche, wobei eine Hilfseinheit (26) vorgesehen ist, die die Heizeinrichtung (20, 20') trägt, wobei die Hilfseinheit mit dem Gehäuse (12) in einer austauschbaren Weise zusammenarbeitet, wie zum Beispiel durch Einrichtungen von Einschnapp-Passeinrichtungen (27, 28).

15. Gebäude (23), mit einer Fassade (2) und einer passiven Belüftungsvorrichtung gemäß einem der vorhergehenden Ansprüche, um dem Gebäude aufgrund einer Druckdifferenz zwischen der Außenseite (17) und der Innenseite (18) des Gebäudes Außenluft passiv zuzuführen.

## Revendications

1. Dispositif de ventilation passive destiné à être utilisé dans un bâtiment, comprenant un boîtier allongé (12) qui définit une direction longitudinale x, une direction verticale z perpendiculaire à la direction longitudinale et une direction transversale y perpendiculaire à la direction longitudinale et à la direction verticale, lequel boîtier (12) comprend des profils interconnectés (5-11) qui sont dirigés dans la direction longitudinale, un passage de ventilation (13) qui s'étend dans la direction transversale entre une entrée (15) du boîtier (12) pour faire face vers l'extérieur (17) du bâtiment et une sortie (16) du boîtier pour faire face vers l'intérieur (18) du bâtiment afin de fournir un flux d'air entre l'entrée et la sortie, ainsi qu'un volet (14) pour fermer ou ouvrir le passage de ventilation (13), dans lequel des moyens de chauffage sensiblement plat (20, 20') sont munis d'au moins une surface d'échange de chaleur qui s'étend le long de la direction longitudinale, **caractérisé en ce que** la surface d'échange de chaleur s'étend également dans la direction transversale y.

2. Dispositif de ventilation selon la Revendication 1, dans lequel la surface d'échange de chaleur s'étend obliquement par rapport à la direction transversale y.

3. Dispositif de ventilation selon la Revendication 1, dans lequel la surface d'échange de chaleur coïncide avec la direction transversale y.

4. Dispositif de ventilation selon l'une des revendications précédentes, dans lequel la surface d'échange de chaleur est rectiligne en coupe transversale ou courbée en coupe transversale.

5. Dispositif de ventilation selon l'une des revendications précédentes, dans lequel les moyens de chauffage ont deux surfaces d'échange de chaleur qui se tournent le dos l'une et l'autre et qui s'étendent chacune dans la direction transversale et/ou sont mutuellement sensiblement parallèles.

6. Dispositif de ventilation selon l'une des revendications précédentes, dans lequel les moyens de chauffage sont réalisés sous la forme d'une feuille ou plaque de matériau électriquement conducteur.

7. Dispositif de ventilation selon l'une des revendications précédentes, dans lequel les moyens de chauffage dans le boîtier sont supportés par des supports (31) qui sont espacés dans la direction longitudinale.

8. Dispositif de ventilation selon la revendication 7, dans lequel les supports (31) sont configurés pour être thermiquement isolants.

9. Dispositif de ventilation selon l'une des revendications précédentes, dans lequel les moyens de chauffage (20') sont reliés à l'un des profils (5-11) du boîtier (12).

10. Dispositif de ventilation selon l'une des revendications précédentes, dans lequel le boîtier (12) contient un profil auxiliaire (19) auquel sont fixés les moyens de chauffage (20).

11. Dispositif de ventilation selon l'une des revendications précédentes, dans lequel les moyens de chauffage (20) sont situés à l'intérieur des profils (5-11) qui définissent le boîtier (12).

12. Dispositif de ventilation selon l'une des revendications précédentes, dans lequel la sortie (16) est munie d'un volet (14) qui peut être déplacé entre une position ouverte pour ouvrir la sortie et une position fermée pour fermer la sortie, et l'élément de chauffage (20) est situé sur ledit volet (14).

13. Dispositif de ventilation selon l'une des revendications précédentes, comprenant des moyens de fixation qui sont situés sur le côté supérieur du boîtier pour une fixation à une poutre de châssis et des moyens de fixation inférieurs pour une fixation à un panneau, tel qu'un panneau en verre, et/ou des moyens de fixation (21) qui sont situés sur le côté supérieur du boîtier pour une fixation à la frontière (4) d'une ouverture dans la façade et des moyens de fixation inférieurs (22) pour une fixation à un châssis (3).

14. Dispositif de ventilation (1) selon l'une des revendications précédentes, dans lequel une unité auxiliaire (26) est agencée qui porte les moyens de chauffage (20, 20'), laquelle unité auxiliaire coopère avec le boîtier (12) d'une manière remplaçable, telle que par des moyens d'encliquetage (27, 28).

15. Bâtiment (23), comprenant une façade (2) et un dispositif de ventilation passive selon l'une des revendications précédentes, pour alimenter passivement de l'air extérieur dans le bâtiment en raison d'une différence de pression entre l'extérieur (17) et l'intérieur (18) du bâtiment.
